# EUROPEAN PATENT APPLICATION

(11) **EP 2 617 932 A2**
(43) Date of publication of application: **24.07.2013**
(21) Application number: 13152384.7
(22) Date of filing: 23.01.2013
(51) Int. Cl.: E06B 3/263

(54) **Composite structural member**

(30) Priority: 23.01.2012 DK 201270037
(71) Applicant: Barsmark A/S, 9400 Norresundby (DK)
(72) Inventor: Andersen, Paul-Erik, 9381 Sulsted (DK); Tranekaer, Asbjørn, 7323 Give (DK)
(74) Representative: Tellefsen, Jens J.

(57) **Abstract**

Composite structural member particularly used for making sash frames and window frames, where said composite structural member in cross section comprises a generally U-shaped timber part, an insert made from a relatively stiff and hard polymer material fitted and fastened inside the U-shaped profile, and a closing timber member, which closing member seals off the insert against the free ends of the U-shaped timber part.

## Description

### Field of the Invention

The present invention is directed to a composite structural member particularly used for making sash frames and window frames as well as a method of manufacturing said composite structural member and a method of manufacturing a window frame using such a composite structural member.

### Background of the Invention

In the art it is well-known to use composites when constructing frames of this type. Typically these frames are made such that they have three distinct layers which typically from the outside towards the inside is a wood or aluminium layer, an insulating layer and a wood layer. Typically these constructions are adhesively connected such that the overall insulating properties of the window or sash frame are improved relative to frames constructed entirely of wood. Examples of such constructions are illustrated in NL 1034047, EP 1239109, DE 9411703 U, DE 29800813 U, DE 2630573, DE 20208153 U. Common for all these examples of prior art is the fact that the insulating layer, usually sandwiched between two wood/timber layers is exposed on the surface of the finished profile.

This in turn provides a number of drawbacks. When having to finish the profiles, for example by sanding or grinding followed by paint or vanish, it is necessary firstly to select a treatment method suitable for the wood part and secondly suitable for the insulation (or sandwiched) part. Thereafter selection of a paint, varnish or lacquer is limited to products which are not transparent such that the sandwiched insulation will not be visible when the frame is made from different materials. In many applications it is desireable to provide untreated or transparently varnished sash or window frames which is often aesthetically pleasing to the user. This is not possible, when the paint or varnish has to effectively cover the sandwich construction. Furthermore, different methods of applying the paint or lacquer to the surface must often be used in that the adhesive properties of the wood is different from the adhesive properties of the insert sandwiched between the two wood layers.

Furthermore, when working the profiles, i.e. through the machinery, care must be taken to provide the correct tools in the machine which will correctly and adequately work the material such that for example one set of tools must be provided in order to provide the correct sanding, grinding, milling etc. of the wood whereas other tools shall be provided in order to work the different materials sandwiched between the two pieces of wood.

### Object of the Invention

Consequently, it is an object of the present invention to provide a construction which alleviates these disadvantages without sacrificing any of the physical properties such as strength, durability and insulation obtained with the prior art constructions.

### Description of the Invention

The invention addresses this by providing a composite structural member particularly used for making sash frames and window frames, where said composite structural member in cross section comprises a generally U-shaped timber part, an insert made from a relatively stiff and hard polymer material fitted and fastened inside the U-shaped profile, and a closing timber member, which closing member seals off the insert against the free ends of the U-shaped timber part.

With this configuration all surfaces of the structural member is provided with a wood finish and as such may be machined, worked, sanded, grinded, cut and painted just like any other timber member. The relatively stiff and hard polymer material fitted and fastened inside the wood profile will typically have an insulation value which is twice as good as that of the wood, but will have the same physical characteristics as wood with respect to shrinkage, temperature, deformation, moisture content etc. Naturally, wood is a relatively broad term, but within the meaning of this application wood at least comprises wood/timber suitable or ready for being treated in wood working machines, some naturally stable wood types, such as for example Akoya, or other treated types of wood, where the treatment may be oven dried, heat treated, acid impregnated, and where the insert has a trapezoidal cross-sectional shape. Wood suitable for further industrial treatment usually has a moisture content in the range 1% to 12 %.

With the insert having a trapezoidal cross-sectional shaped configuration and when having the widest part of the trapezoidal shaped insert facing what would be the outer side of the finished profile, the wood is stabilized by the insert which, since it is made from a polymer material, is much more stable and homogenous than the wood and as such will provide a better structural member altogether.

The longer side of the trapezoidal insert will typically be facing the outside of the finished window or sash frame whereby it is achieved that no thermal bridge is created in this part of the frame member whereas where the glass part of the window is arranged, the glass (windowpane) will break the thermal barrier as will the fittings around the glass. Furthermore the trapezoidal cross section of the insert makes it possible to make deeper profiles in the opposite side of the structural member which is often desirable when machining the structural member into the desired profile used for the window or sash frame.

In a still further advantageous embodiment the insert is made from a polymer material comprising regenerated polyurethane and fibres selected from one or more of the following fibre types: glass, polyester, polypropylene.

The regenerated polyurethane will usually or mainly be derived from discarded or waste stemming from production production of polyurethane insulation production. The polyester and/or polypropylene usually stems from for example car seats and the like. The polyurethane is pulverized or divided into very fine particles and fibres are mixed into the mix before it is shaped into a stiff and hard polymer material. The fibres are added in order to provide better ductility and cohesion in the material such that when mounting for example window frames to a construction, fastening devices such as screws and the like will exhibit higher withdrawal strength than what is achievable when the same screws are attached in the wood part. Therefore, the polyurethane material provides added security when mounting the finished frames in the constructions.

In a further advantageous embodiment the insert is made from a pulverized regenerated polyurethane material, which material is shaped into a hard polymer material under pressure.

The preferred material is available from the Barsmark A/S, Denmark under the trade name PT200. Further, derivatives of this material having higher or lower densities are also available, but particularly PT200 has shown exceptionally good characteristics when incorporated in a composite structural member for the use within the scope of the present invention.

During the manufacturing process the regenerated polyurethane is pulverized and as already mentioned above fibres are added to the mixture together with a binder which typically is an isocyanate. The mixture is hereafter consolidated by being exposed to relatively high pressure and heat resulting in a very strong and hard polymer material which may be machined with ordinary tools, has good insulating properties and shrinkage and moisture characteristics substantially corresponding to wood which makes the material especially suitable for incorporation in constructions of the type mentioned above.

In a further advantageous embodiment of the invention the insert is made from an extruded polymer material in the shape of a hard foam. Although as already mentioned above PT200 is the preferred material, almost the same advantages may be derived with a hard foam except for the strength properties, but for applications where strength is secondary to the insulating properties, an extruded polymer material as for example hard foam may advantageously be used in that the hard foam may be extruded directly into the profile and thereby obtain an exceptionally good fit and at the same time provide very good insulating properties. Examples of alternative materials is polyurethane foams, expanded polystyrene.
The PT 200 material in normal densities (500 kg/m3) will have u-values around 0,076 W/m2K, and for density 400 kg/m3 approx. 0,06 W/m2K, whereas polyurethane foam (density 50 kg/m3) can be designed with u-values of 0,0226 W/m2K and expanded polystyrene u-value 0,04 W/m2K (natrurally depending on the densities). A further suitable product is sold by the tradename "CompacFoam", also available from Barsmark A/S. This product has an u-value for density 100 kg/m3 of 0.04 W/m2K. When selecting the appropriate material to be inserted in the groove in the timber profile is is a compromise between strength and insulation.

Wood will have an equivalent u-value of approx. 0,12 W/m2K at density 450 kg/m3 and a moisture content below 18 %.

The invention is also directed to a method of manufacturing a composit structural member as well as the further step of manufacturing a window frame or a sash frame for use with the invention.

### Description of the Drawing

The invention will now be explained with reference to the accompanying drawing wherein
- Figure 1: illustrates a cross-section through a raw timber item
- Figure 2: illustrates the contours of the profile
- Figure 3: illustrates a further example corresponding to the example illustrated with figures 1 and 2
- Figure 4: illustrates
- Figure 5: illustrates the raw timber profiles provided with the groove
- Figure 6: illustrates a cross-section of the raw profile

### Detailed Description of the Invention

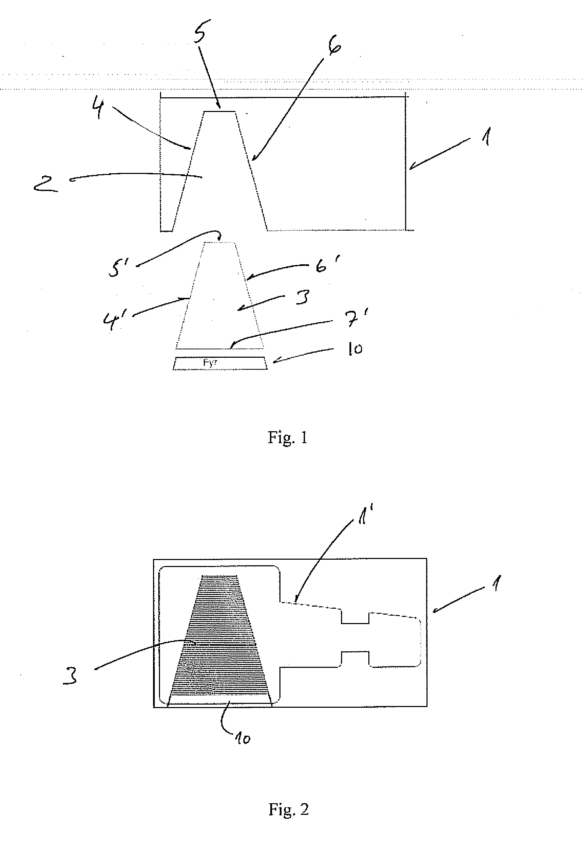

In the figures 1-6 are illustrated various embodiments of the invention.

In figure 1 is illustrated a cross-section through a raw timber item 1 into which has been milled a groove 2. A polymer insert 3 has been given a corresponding shape to the groove 2 such that as the insert 3 is inserted into the groove, the sides 4, 5, 6 will closely fit to the sides 4', 5', 6' of the insert 3. The sides 4', 6' are shorter than the sides 4, 6 such that room is left for the closing member 10 which is also made from timber.

The insert is provided with an adhesive on all four sides inserted into the groove 2 such that adhesion will be created between the sides 4, 5, 6 of the timber member 1 and the sides 4', 5', 6' of the insert 3. Finally, the closing member 10 will be inserted into the remaining part of the groove and adhesively attached to the side 7' of the insert and the remaining portions of the sides 4, 6 not in contact with the insert 3. In this manner a rectangular profile as illustrated in figure 2 is created. As is clear from figure 2 the contours of the profile are flush, also where the closing member 10 constitutes the surface of the timber element 1. The raw profile 1 will be introduced into a woodworking machine which by milling, sanding, grinding etc. will transform the profile of the raw profile 1 into the profile illustrated by the lines 1'. As is evident the machine transforming the profile from the raw profile 1 depicted in figure 1 to the profile illustrated in figure 2 by the lines marked with 1' only has to work on wood surfaces and after having reworked the profile into the shape indicated by the lines 1'. All further processing such as sanding, painting, lacquering etc. will be carried out on a wood surface.

At the same time, however, the presence of the insert 3 provides added insulation such that although it appears to be a homogenous wood item the insulating properties will be greatly improved.

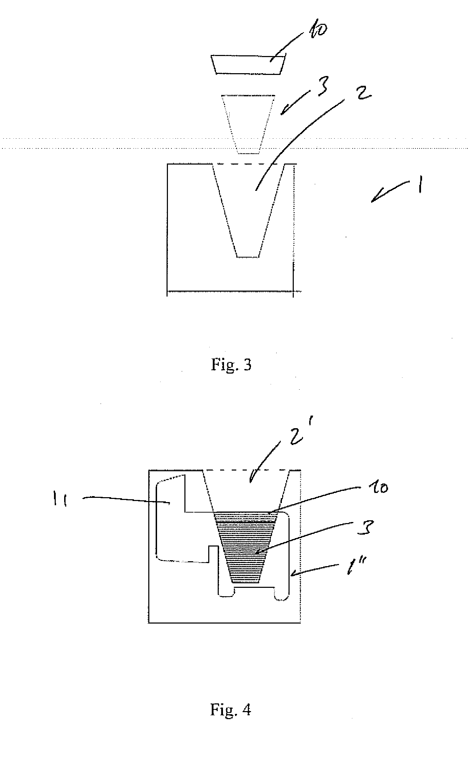

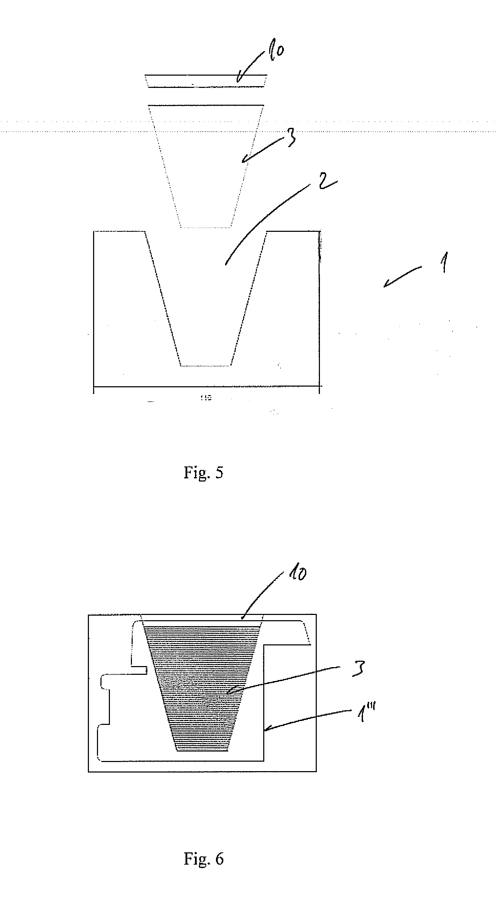

Turning to figure 3 a further example corresponding to the example illustrated with figures 1 and 2 is illustrated as is the case with respect to figures 5 and 6. The figures 3 and 5 illustrate the raw timber profiles provided with the groove 2 into which a correspondingly sized insert 3 is inserted and a closing member 10 is finally provided. As may be seen with reference to figures 3 and 4 the groove is much deeper than the extent of the insert 3 such that the insert 3 and the closing member 10 only partly fill the groove 2 such that a part of the groove 2' is left open. This is due to the fact that the desired profile 1" has a shape where it is desirable to insert the closing member inside the groove to a level where the future surface of the finished profile 1" will be. At the same time it is necessary to provide extra height on the size of the groove 2' in order to accommodate the special section 11 being part of the desired profile 1".

Turning to figures 5 and 6 again a groove 2 is provided in the raw timber member 1 with a fitting insert 3 and a closure member 10. When assembled as described with reference to figure 1 and 2 the raw profile will have a cross-section as illustrated with reference to figure 6. The desired profile 1"' in this embodiment requires that also the closure member 10 shall be worked by the woodworking machine in order to create the desired profile 1"'.

As is evident from all the examples described above, the provision of the insert provides that a substantial part of the cross-sectional area of the desired profiles 1', 1", 1'" is constituted by an insulating member having better properties relating to insulation than what is the case had it been wood. At the same time by using material as PT200 in various densities between 300 kg/m3 and 800 kg/m3 the mechanical properties, which are more or less like wood but with added strength, provide inherent properties to the finished window or sash profile such that an overall improved structure is created. At the same time, due to the provision of the closure member 10 all work carried out in order to achieve the desired profiles 1', 1" and 1"' may be carried out by traditional woodworking machinery and techniques, without the extra tear and wear which could otherwise arise from having to work on the tougher materials from which inserts could be made. At the same time any finishing work applied to the desired profiles after having been machined only has to be adapted to be applied to a wood surface in that all exposed surfaces of the profile is a wood surface.

Above the invention has been described with reference to particular embodiments, but further variations and embodiments are contemplated within the scope of the present invention which is only limited by the appended claims.

## Claims

1. Composite structural member particularly used for making sash frames and window frames, where said composite structural member in cross section comprises a generally U-shaped timber part, an insert made from a relatively stiff and hard polymer material fitted and fastened inside the U-shaped profile, and a closing timber member, which closing member seals off the insert against the free ends of the U-shaped timber part and where the insert has a trapezoidal cross-sectional shape.

2. Composite structural member according to claims 1, wherein the insert is made from a polymer material comprising regenerated polyurethane and fibres selected from one or more of the following fibre types: glass, polyester, polypropylene.

3. Composite structural member according to claims 1 or 2 wherein the insert is made from a pulverized regenerated polyurethane material, which material is shaped into a hard polymer material under pressure.

4. Composite structural member according to claims 1 or 2, wherein the insert is made from an extruded polymer material in the shape of a hard foam.

5. Method of manufacturing a composite structural member where:
a) a longitudinal groove is formed in a timber member;
b) an insert made from a relatively stiff polymer material having a cross-section shape corresponding to the groove's shape, but with a shallower height is inserted and fastened inside the groove;
c) a timber closing member, having dimensions corresponding to the remaining part of the groove is fastened in the remaining groove.

6. Method according to claim 5 wherein the insert and the closing timber member are adhesively fastened to each other and the timber member.

7. Method according to claim 5 wherein the composite structural member is provided with its finished cross-sectional shape in a regular woodworking profiling machine.

8. Method of manufacturing a window frame or sash frame wherein a composite structural member according to any of claims 1 to 4 is introduced into a planning, milling, and/or shaping machine whereby the composite structural member is given its desired window or sash frame profile, whereafter the window or sash frame profile is cut into desired lengths and assembled into a window or sash frame.
